Europäisches Patentamt

European Patent Office

Office européen des brevets

(11) Numéro de publication: **0 251 856**
**A1**

(12) # DEMANDE DE BREVET EUROPEEN

(21) Numéro de dépôt: **87401348.5**

(22) Date de dépôt: **16.06.87**

(51) Int. Cl.4: **F 16 L 11/12**

(30) Priorité: **25.06.86 FR 8609233**

(43) Date de publication de la demande:
**07.01.88 Bulletin 88/01**

(84) Etats contractants désignés:
**BE DE ES FR GB IT NL SE**

(71) Demandeur: **Choukroun née Blutel, Georgette**
**77, rue de Reims**
**F-94700 Maisons Alfort (FR)**

(72) Inventeur: **Choukroun née Blutel, Georgette**
**77, rue de Reims**
**F-94700 Maisons Alfort (FR)**

(74) Mandataire: **Polus, Camille et al**
**c/o Cabinet Lavoix 2, Place d'Estienne d'Orves**
**F-75441 Paris Cedex 09 (FR)**

(54) Tube multistrate relativement souple étanche aux gaz notamment à la vapeur d'eau.

(57) L'invention concerne un tube relativement souple étanche notamment à la vapeur d'eau comprenant une âme centrale (10), une gaine extérieure (20) protectrice et une pellicule métallique munie (30) interposée entre âme et gaine.

La pellicule (30) est faite, de préférence, d'un feuillard d'aluminium enduit sur l'une au moins de ses deux faces d'une couche de pratiquement même épaisseur d'une substance qui assure la cohésion avec les matériaux dont sont faites âme et/ou gaine.

Application aux circuits scellés contenant un liquide aqueux.

FIG.1

EP 0 251 856 A1

## Description

<u>Tube multistrate relativement souple étanche aux gaz notamment à la vapeur d'eau</u>

La présente invention concerne les tubes étanches aux gaz notamment à la vapeur d'eau et, plus particulièrement, les tubes relativement souples constitués de différentes strates coaxiales.

On sait faire des tubes souples étanches à l'eau. De tels tubes sont, habituellement, faits en caoutchouc ou en matière plastique et ils sont, au besoin, renforcés par des armures métalliques ou en fibres de verre ou analogue, par exemple enroulées en hélice ou disposées à la manière de treillis. Ce type de tube présente généralement, en fonction des épaisseurs et des matériaux choisis, de bonnes propriétés tant hydrauliques que mécaniques et une résistance certaine aux agressions aussi bien mécaniques que chimiques.

Malheureusement, ce type de tube, s'il est étanche à l'eau à l'état liquide, ne l'est absolument pas lorsqu'elle est à l'état gazeux, c'est-à-dire de vapeur. Le défaut d'étanchéité c'est-à-dire la perméabilité à la vapeur d'eau constitue, pour certaines applications, un vice rédhibitoire qui fait qu'il est impossible d'utiliser ce type de tube. C'est en particulier le cas, lorsque des tubes de ce type sont destinés à relier les composants d'un circuit qui est scellé de manière étanche et définitive.

Dans un tel circuit, scellé d'une manière définitive, il est clair qu'un défaut d'étanchéité à la vapeur d'eau est un handicap grave car au fil du temps, de la vapeur d'eau s'échappe du circuit du fait de la perméabilité des parois des tubes et il se forme alors des bulles dans ce dernier. La présence de telles bulles peut rendre complètement inutilisable l'installation. C'est, par exemple, le cas lorsque le liquide qui emplit le circuit scellé est destiné à transmettre des efforts. En effet, si ce circuit se trouve soumis en un point quelconque à un effort à transmettre, par exemple à l'aide d'un piston, la pression à laquelle il est soumis au lieu d'exercer son action sur l'organe à commander ne fait que comprimer la bulle de gaz qui s'est formée en un point du circuit ; l'effort que l'on voulait transmettre n'est absolument pas transmis et le circuit scellé que l'on a constitué devient totalement inopérant par suite de la perméabilité à la vapeur d'eau des parois des tubes de raccordement.

Des circuits étanches de ce type sont, par exemple, utilisés dans l'industrie automobile à bord des véhicules, notamment pour régler la position ou l'orientation de certains dispositifs tels que les dispositifs d'éclairage.

L'invention vise à réaliser un tube souple multistrate qui soit étanche aux gaz notamment à la vapeur d'eau.

L'invention a pour objet un tube relativement souple étanche notamment à la vapeur d'eau comprenant une âme centrale et une gaine extérieure protectrice, caractérisé en ce qu'entre âme et gaine est interposée une pellicule métallique mince. Selon une des particularités de l'invention, l'âme centrale est faite en un tube de polyéthylène à haute densité, la gaine extérieure protectrice est faite en polyprolylène ou en polyéthylène haute densité et la pellicule métallique mince qui est interposée entre elles est constituée d'un feuillard métallique d'aluminium qui est enduit sur au moins une de ses faces et de préférence sur ses deux faces, d'une couche de polyéthylène basse densité.

D'autres caractéristiques de l'invention apparaîtront à la lecture de la description qui suit et à l'examen du dessin, où :

-la Fig.1 est une vue schématique d'un mode de réalisation d'un tube étanche notamment à la vapeur d'eau selon l'invention, en cours de fabrication ;

- la Fig.2 est un graphique qui illustre de manière chiffrée le degré d'étanchéité à la vapeur d'eau de différents modes de réalisation de tubes selon l'invention.

La description qui suit et le dessin qui l'accompagne ne sont donnés qu'à titre d'illustration et ne concerne que ce qui a trait à l'invention. Tout ce qui ne se rapporte pas directement ou indirectement à l'invention, est constitué d'éléments de la technique courante classique en la matière.

C'est pourquoi on ne s'étendra pas plus longuement sur la manière de fabriquer des tubes en matière plastique ou autre, qu'ils soient ou non multistrates ; ils sont habituellement obtenus par extrusion. En matière d'extrusion, il est classique d'utiliser, si nécessaire, des filières simples ou multiples de manière à obtenir en "ligne" et/ou une seule opération des éléments multistrates coaxiaux comme c'est le cas de l'invention.

De même, le revêtement d'un tube par une pellicule ou analogue appliquée à sa surface est obtenu à l'aide de machines courantes disponibles sur le marché.

Selon l'invention, le tube étanche notamment à la vapeur d'eau est constitué d'une âme centrale 10 et d'une gaine extérieure protectrice 20 entre lesquelles est interposée une pellicule métallique mince 30.

L'âme centrale 10 est, par exemple faite en un tube de polyéthylène haute densité dont l'orifice est, par exemple, de 2,3 mm et dont le diamètre extérieure est de 4 mm.

La gaine extérieure protectrice 20 est constituée de préférence en un matériau qui présente un fort retrait et qui a une bonne résistance aux attaques chimiques ; dans ce cas particulier on utilise du polypropylène ou du polyéthylène haute densité. Lorsque cette gaine est en place, le mode de réalisation du tube selon l'invention présente, terminé, un diamètre extérieur de 6 mm environ.

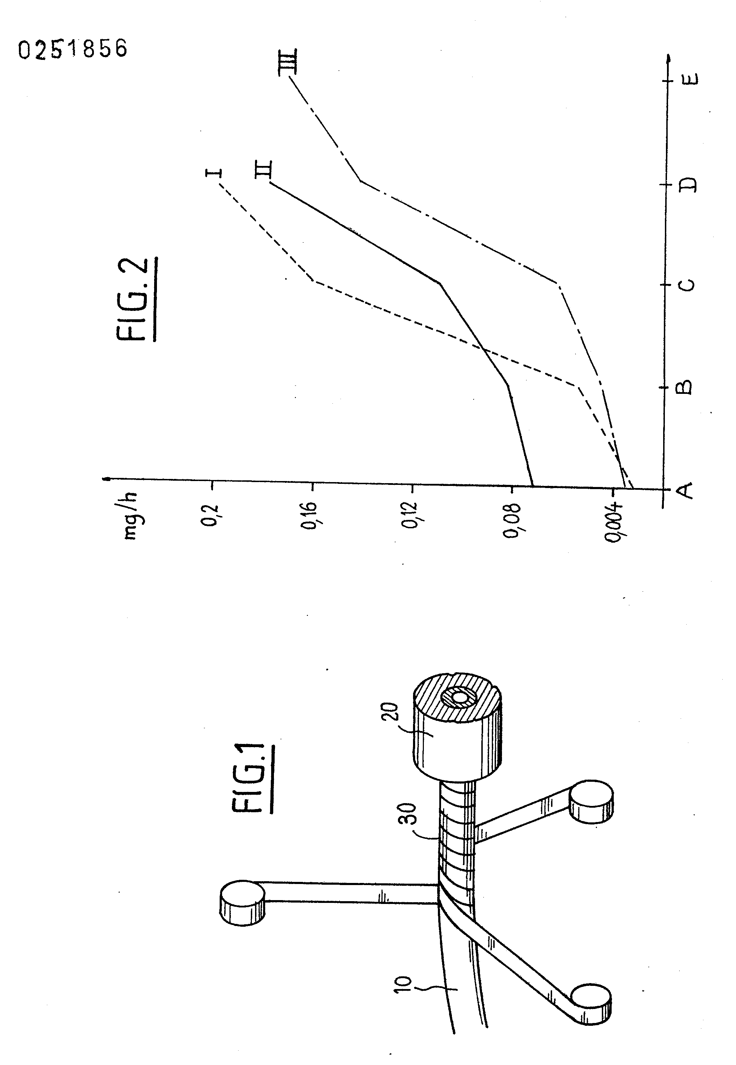

Selon l'invention, entre cette âme et cette gaine est interposée une pellicule métallique mince 30. Cette pellicule métallique mince est appliquée sous la forme d'une bande qui enveloppe l'âme centrale à la manière d'une gouttière fermée dont l'axe coïncide avec celui de l'âme et dont les bords parallèles à l'axe du tube sont jointifs, à recouvrement ou bien agrafés par pliage l'un sur l'autre. Les techniques d'enveloppement d'un tube sont bien connues. Selon une autre technique de réalisation, comme cela est par exemple dessiné schématiquement sur la Fig.1, l'âme centrale est enveloppée par au moins une bande que l'on déroule en hélice autour du tube. Dans ce mode de réalisation, on utilise, par exemple, trois bandes de manière à former une hélice non pas simple mais une hélice triple. Les bords contigüs de deux spires successives de l'hélice, qu'elle soit simple ou multiple, peuvent être jointifs ou à recouvrement.

Dans le mode de réalisation préféré de l'invention, on utilise comme pellicule un feuillard métallique d'aluminium qui est enduit sur chacune de ses deux faces d'une couche de polyéthylène basse densité ; pour une réalisation particulière, on utilise un feuillard d'aluminium de 20 environ d'épaisseur enduit sur chacune de ses deux faces d'une couche à raison de 25g/m², ce qui correspond à une épaisseur de couche d'enduction de l'ordre de 25 ou 26 environ. D'autres métaux que l'aluminium conviennent aussi.

Selon l'invention, on a constaté que la qualité de l'étanchéité aux gaz, notamment à la vapeur d'eau, n'était pas grandement influencée par l'épaisseur de la pellicule métallique mince interposée entre âme centrale et gaine protectrice extérieure. Par contre, on a observé que le contact et la cohésion de cette pellicule métallique mince, en particulier avec l'âme centrale, était primordiale. En effet, lorsqu'un tel tube est courbé ou cintré, la pellicule métallique a tendance à se plisser et à former en quelque sorte des poches. En perdant son contact d'avec la surface extérieure de l'âme centrale, de la vapeur d'eau peut s'échapper par les interstices et ensuite filtrer à l'extérieur. C'est pourquoi pour obtenir une parfaite cohésion de la pellicule métallique mince avec l'âme centrale, et aussi avec la gaine extérieure protectrice, on utilise une pellicule métallique mince qui est enduite sur ses deux faces d'une couche d'une substance qui assure une interdépendance intime avec les matériaux qui sont disposés de part et d'autre d'elle. Ainsi, par exemple en chauffant l'ensemble, par induction ou par infra-rouge, il est possible d'assurer une bonne cohésion de l'ensemble. Cette cohésion est essentielle pour la qualité de l'imperméabilité à la vapeur d'eau du tube souple multistrate selon l'invention.

Le choix des épaisseurs de paroi de l'âme centrale et de la gaine extérieure ainsi que de l'épaisseur de la pellicule mince intermédiaire est fonction des contraintes mécaniques, par exemple de la pression interne que doit supporter le tube selon l'invention, des variations de température qu'il doit subir et aussi des rayons courbures minimaux suivant lesquels il doit être cintré.

Le choix des matériaux de l'âme et de la gaine est fonction du fluide ou liquide qu'il doit contenir et aussi des substances auxquelles il doit résister chimiquement.

Dans le cas d'une application au secteur automobile, si un tube multistrate selon l'invention doit être placé sous le capot d'un véhicule il doit bien sûr résister à la température qui y règne, aux projections d'huile et d'essence de même qu'aux vapeurs corrosives qui peuvent s'échapper de la batterie d'accumulateur au plomb.

Sur les graphiques de la Fig.2, on a tracé des courbes qui montrent la perte de poids, en mg/h et cela pour une durée expérimentale de 192 heures, pour différents modes de réalisation. La perte de poids d'un tube selon l'invention, empli d'une composition liquide eau - glycol à 50% puis scellé hermétiquement, peut être considérée comme régulière pendant cette période à l'exception du début où se manifestent des phénomènes transitoires. Ceci résulte des pesées régulièrement faites au cours des essais. On a utilisé des âmes centrales identiques faites de polyéthylène haute densité et des gaines extérieures protectrices de même géométrie mais de nature différente entre lesquelles on a interposé une pellicule métallique mince d'un feuillard d'aluminium de 20 u et de 40 u d'épaisseur avec une enduction sur une face ou sur deux faces à raison de 25g/m² de polyéthylène basse densité. Ce feuillard enduit enveloppe l'âme centrale à la manière d'une hélice ou à la manière d'une gouttière.

La courbe I correpond à une gaine extérieure en polyéthylène haute densité, la courbe II à une gaine en polyéthylène basse densité et la courbe III à une gaine en polypropylène. Le repère A est un feuillard de 20 u enduit deux faces enroulé en hélice, le repère B au même feuillard mais enduit un face enroulé en hélice et les repères C, D, E à un feuillard de 40 u enduit une face enroulé en hélice ou disposé en gouttière pour les deux derniers.

L'examen des graphiques montre que l'on obtient les meilleurs résultats avec des enveloppements de l'âme centrale en hélice et que la qualité de l'étanchéité est pratiquement indépendante de l'épaisseur de la couche d'aluminium mais est liée à la cohésion.

Dans les mêmes conditions, un tube classique fait seulement d'une âme centrale en polyéthylène haute densité revêtu d'une gaine extérieure de même nature et ayant les mêmes dimensions que dans les essais précédents perd environ 0,2 mg/h de vapeur d'eau. On voit donc que grâce à l'invention, on a amélioré la qualité de l'étanchéité à la vapeur d'eau d'un facteur 5.

Si besoin une charge appropriée, par exemple du noir de carbone, est ajoutée à l'âme et/ou gaine.

Dans le mode de réalisation décrit, on a supposé que l'on utilisait un feuillard d'aluminium qui était enduit sur l'une ou sur ses deux faces d'une couche d'une substance qui assure sa cohésion sur l'âme centrale et/ou la gaine extérieure protectrice. Il est clair qu'au lieu d'utiliser un feuillard métallique, on peut utiliser une feuille en matière plastique métallisée par pulvérisation cathodique, par vaporisation sous vide ou bien par dépôt "électroless". L'important est d'obtenir un couche métallique formant barrière pratiquement absente de piqures et discontinuités. On peut alors utiliser une pellicule métallique encore plus mince.

De même on peut utiliser une feuille en matière plastique contre-collée d'un feuillard métallique. Selon une autre technique on fait une métallisation directe de la surface extérieure de l'âme centrale, après que celle-ci ait subit un traitement superficiel approprié qui permet un bon "accrochage" du revêtement métallique; pour ce faire on soumet la surface superficielle à un bombardement ionique, ou à une attaque chimique pour y former, par exemple, des microcratères.

Pour ce qui est de la gaine extérieure, on a indiqué qu'on pouvait l'obtenir par une extrusion en ligne; il est clair qu'on peut aussi la faire par un dépôt "au tremper".

On a donné à titre d'exemple une application du tube souple multistrate selon l'invention étanche notamment à la vapeur d'eau mais il est bien clair que d'autres applications que celle à la technique automobile sont possibles.

**Revendications**

1. Tube relativement souple étanche aux gaz notamment à la vapeur d'eau comprenant une âme centrale (10) et une gaine extérieure (20) protectrice entre lesquelles est interposée une pellicule métallique mince (30) caractérisé en ce que l'une au moins des faces de cette pellicule est enduite d'une couche d'une substance assurant sa cohésion avec celle de ces âme et gaine vers laquelle elle est orientée.

2. Tube selon la revendication 1, caractérisé en ce cette pellicule (30) est enduite sur sa face orientée vers l'âme centrale (10).

3. Tube selon l'une quelconque des revendications 1 ou 2, caractérisé en ce que cette pellicule (30) est enduite sur sa face orientée vers la gaine extérieure (20).

4. Tube selon l'une des revendication 1 à 3, caractérisé en ce que cette pellicule (30) est faite d'un feuillard métallique.

5. Tube selon l'une des revendications 1 à 3, caractérisé en ce que cette pellicule (30) est faite d'une feuille en matière plastique dont l'une au moins des faces est métallisée avant enduction.

6. Tube selon l'une quelconque des revendications 1 à 5, caractérisé en ce que cette pellicule (30) est faite d'une bande qui enveloppe l'âme centrale (10) à la manière d'une gouttière fermée dont l'axe coïncide avec celui de l'âme.

7. Tube selon la revendication 6, caractérisé en ce que les bords de cette gouttière parallèles à l'axe sont jointifs, à recouvrement ou agraffés.

8. Tube selon l'une quelconque des revendications 1 à 5, caractérisé en ce que cette pellicule (30) est faite d'au moins une bande qui enveloppe l'âme centrale (10) à la manière d'une hélice.

9. Tube selon la revendication 8, caractérisé en ce que les bords contigüs de deux spires successives de l'hélice sont jointifs ou à recouvrement.

10. Tube selon l'une quelconque des revendications 1 à 9, caractérisé en ce que l'épaisseur de la pellicule (30) et celle de la couche d'enduction sont du même ordre de grandeur.

11. Tube selon l'une quelconque des revendications 1 à 10, caractérisé en ce que cette pellicule métallique mince (30) est de l'aluminium.

12. Tube selon l'une quelconque des revendications 1 à 11, caractérisé en ce que cette pellicule (30) est enduite sur ses deux faces d'une couche de polyéthylène basse densité.

13. Tube selon l'une quelconque des revendications 1 à 12, caractérisé en ce que cette âme centrale (10) est faite en polyéthylène haute densité.

14. Tube selon l'une quelconque des revendications 1 à 13, caractérisé en ce que cette gaine extérieure (20) est faite en polyéthylène haute densité ou en polypropylène.

15. Tube selon l'une quelconque des revendications 10 à 14, caractérisé en ce que l'épaisseur de la pellicule métallique (30) est de l'ordre de 20 μ environ et celle de la couche d'enduction de l'ordre de 20 μ environ.

# FIG.1

10   30   20

# FIG. 2

mg/h

0,2 — I

0,16 — II

0,12

0,08

0,004

A   B   C   D   E

I   II   III

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | CH-A- 501 180 (KABEL- UND METALLWERKE GUTEHOFFNUNGSHÜTTE AG)<br>* Revendications; figures * | 1-4,6, 7,11 | F 16 L 11/12 |
| A | | 12 | |
| A | FR-A-2 486 471 (R. BOSCH GmbH)<br><br>* Revendications; figure 2 * | 1,3,6, 7,13, 14 | |
| A | FR-A-1 591 251 (OHLER FLEXROHR GmbH)<br><br>- - - - - | 8,9 | |

DOMAINES TECHNIQUES
RECHERCHES (Int. Cl.4)

F 16 L 11
B 60 Q 1

Le présent rapport de recherche a été établi pour toutes les revendications

| Lieu de la recherche | Date d'achèvement de la recherche | Examinateur |
|---|---|---|
| LA HAYE | 01-10-1987 | BARTSCH A.W. |